# EUROPEAN PATENT SPECIFICATION

(11) **EP 0 320 314 B1**
(45) Date of publication and mention of the grant of the patent: **19.07.1995**
(21) Application number: 88311757.4
(22) Date of filing: 12.12.1988
(51) Int. Cl.: B32B 27/12, B65D 81/26

(54) **Water-absorptive sheet for food package**
Wasserabsorbierender Bogen für Nahrungsmittel
Feuille absorbant l'eau pour emballages alimentaires

(30) Priority: 10.12.1987 JP 313839/87; 04.05.1988 JP 59702/88
(43) Date of publication of application: 14.06.1989
(73) Proprietor: JAPAN EXLAN COMPANY, LTD., Osaka-shi Osaka 530 (JP)
(72) Inventor: Terada, Tatsuo, Suita-shi Osaka-fu (JP); Okuda, Yosuke, Kawachinagano-shi Osaka-fu (JP); Tanaka, Tatsuro, Kita-ku Kyoto-fu (JP); Nakatsuka, Masahiro, Yahata-shi Kyoto-fu (JP)
(74) Representative: Geering, Keith Edwin

(56) References cited:
- EP-A- 0 046 956
- EP-A- 0 229 550
- DE-A- 3 034 169
- FR-A- 2 354 402
- US-A- 4 410 578
- US-A- 4 645 698

## Description

The present invention relates to a water-absorptive sheet for absorbing drips from fresh food such as meat, fish, etc. or absorbing condensed dew generated from food.

When fresh food, such as meat, fish, etc., is packed in a tray-wrap package, drips or condensed dew are generated in the course of storage, transportation, or display, not only impairing the appearance of the package but also lowering the freshness of the food.

As means for absorbing such drips, there have been proposed sheet materials composed of cellulosic fibers, such as woven or knitted fabric, non woven fabric, or paper-like material (Japanese Utility Model Publication No. 5349/79), and sheet materials made of a high molecular absorber in powder form covered with paper or non-woven fabric (Japanese Utility Model Kokai (Laid-open) No. 49779/83). EP-A-0229550 similarly discloses food packaging sheet in the form of a support sheet (e.g. of paper or plastics) carrying acrylonitrile polymer in pulverized form for water retention.

However, since the sheet materials of cellulosic fibers absorb drips by capillary action, the quantity absorbed is very small, and in addition, the drip color spreads around the contact area with the packed content, giving an ugly appearance;
moreover they release absorbed water when pressure is applied, and thus they are extremely low in water retentivity.

Furthermore, although the sheet materials composed of a high molecular absorber in powder form have high absorbtive power for drips, they have the following defects: they are very difficult to process into sheet form; they have a small area of water absorption, which results in slow absorption; since there is no movement of absorbed water in them, so-called "blocking" occurs which presses out water-containing gel, and tends to impair appearance and adhere to food; moreover, coupled with large absorbing power of individual high molecular absorbers, the degree of freedom of absorbed and retained water becomes large, and hence they are liable to become culture grounds for bacteria.

FR-A-2354402 discloses bicomponent polyacrylonitrile textile fibers for clothing manufacture; one component has micropores for water retention.

The object of the present invention is to provide a water-absorptive sheet for food packages which is free from hydrogel leakage, adhesion to food, and gel touch (a slimy feel peculiar to hydrogels), is of good liquid absorptive and retentive power, and has practical strength.

The present invention provides an absorptive sheet for food packing which comprises a water-absorptive non-woven sheet, wherein the non-woven water-absorptive sheet comprises water-absorptive fibers with a layer of hydrogel around a core of acrylonitrile polymer, these fibers containing carboxyl groups in an amount of 0.5-4.0 m mol/g; the absorptive sheet may be provided with a protective sheet on the upper surface or on both upper and lower surfaces thereof.

The invention is further explained with reference to the accompanying drawings, in which Figs 1 to 4 are enlarged cross-sectional views of four embodiments of the invention; and Fig. 5 is a disassembled perspective view, and Fig. 6 is a vertical cross-sectional view, of an embodiment in use.

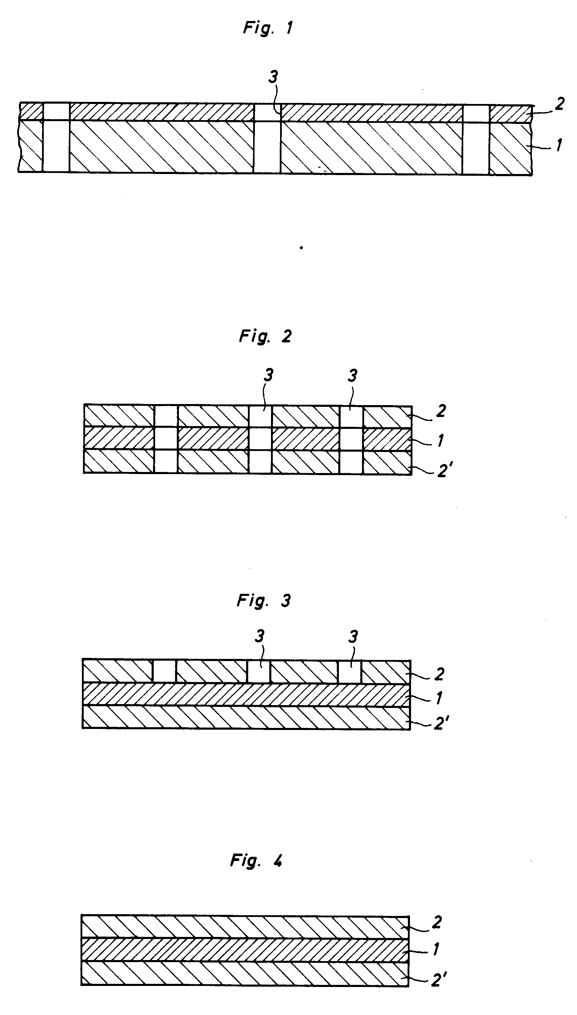

Fig. 1 is an absorptive sheet composed of an absorptive non-woven sheet (1) with a protective sheet (2) provided on its upper surface (which comes into contact with food) and is an example in which a large number of fine holes (3) extend through bolt sheets (1, 2).

In Figs. 2 and 3, an opaque film is used as the protective sheet (2) for the upper surface. Fig. 2 is an example of providing a plurality of fine holes (3) extending through the whole absorptive sheet and Fig. 3 is an example of providing fine holes (3) only through the opaque film. As protective sheet (2') for the other side, there may be used a transparent or opaque film or a non-woven fabric.

Fig. 4 is an example in which a non-woven fabric, woven fabric or knit fabric is used at least as the protective sheet (2) and fine holes are not provided.

The water-absorptive non-woven sheet (1) is a dry- or wet-processed non-woven fabric composed solely of highly water-absorptive fibers, or a mixture of two kinds Of fiber, e.g. said fibers and heat adhesive fibers, or of three or are kinds of fiber, e.g. said two kinds of fiber and another kind of fiber.

The water-absorptive fibers preferably have a water-swellability (ratio of water that can be absorbed for the weight of the fibers) of 3 or more, preferably from 5 to 200. The water-absorptive composite fibers used according to the invention, containing carboxyl groups in an amount of 0.5-4.0 m mol/g, representative of which is LANSEAL (a registered trade mark of Japan Exlan Company, Limited) are desirable since they have no problems in shaping and no problems of giving way under water absorption - because of their having excellent water-swellability and maintaining a practical level of physical properties such as tensile strength and elongation. It is also desirable to bring the degree of neutralization of carboxyl groups to less than 90%, preferably to from 20 to 80%, since the remaining acid-type carboxyl groups (-COOH) can thereby selectively absorb ammonia, amines, etc.

As heat-adhesive fibers, there may be used synthetic fibers such as those of polypropylene, polyethylene, polyester, etc. which can heat-adhere at a comparatively low temperature. Furthermore, depending upon conditions, such synthetic fibers may be used in combination with other fibers suitably selected from other synthetic fibers, regenerated fibers, natural fibers, etc.

For combining the water-absorptive non-woven fabric sheet (1) with the protective sheet(s) (2, 2′), lamination-bonding using an adhesive is possible. However, a heat-adhesion method using hot gas, hot rolls, hot needles, etc. is industrially favorable. From such a viewpoint, it is desirable that the non-woven sheet (1) should be composed of highly water-absorptive fibers in an amount of 95-5 weight %, preferably 80-40 weight %, and heat-adhesive fibers in an amount of 5-95, preferably 20-60 weight %.

The non-woven sheet (1) desirably has a water-swellability of 3 times or more, preferably 5 times or more.

The protective sheets (2, 2′) when provided on both surfaces of the non-woven sheet (1) may be the same or different; there is no restriction as to materials, but there is suitably employed on a non-woven fabric, knit or woven fabric, film of thermoplastic resin, or fibers of thermoplastic resin (heat-adhesive fibers). Among others, by employing a known opaque film made of polyethylene, polypropylene, etc. as the upper surface protective sheet (2), it is possible to effectively conceal the water-absorptive non-woven sheet (1) which has been colored by absorbing drips, etc. Good appearance can thus be obtained, and at the same time there are no problems of adhesion of single filaments to food, etc., since there is no direct contact of food, etc. with fibers.

Since at least the upper surface protective sheet (2) needs to be water-permeable, when film is used for the protective sheet (2) it is provided with a plurality of fine holes (3). But, when using non-woven fabric, etc. which has water permeability in itself, there is no necessity for fine holes (3), though it is permissible to provide them. Non-woven fabrics, etc. are not required to be formed solely of heat-adhesive fibers, but they may be suitably blended with other fibers such as natural fibers, regenerated fibers, semi-synthetic fibers, etc.

As a method of combining the water-absorptive non-woven sheet (1) and the protective sheet(s) (2, 2′), heat-adhesion is industrially favorable. Among others, when hot needles are used, fine holes (3) can be formed simultaneously with heat-adhesion. Furthermore since each of the sheets is bonded by dots, the elasticity and absorptive power of the finally obtained absorptive sheet is not impaired, and thus the use of hot needles is particularly desirable.

When the protective sheets or sheet (2 and/or 2′) is a non-woven fabric, the non-woven fabric may be formed by laminating and integrating the webs obtained by carding the fibers composing the water-absorptive non-woven sheet (1) and the protective sheet(s), respectively, or each of both sheets may be made by laminating a plurality of webs.

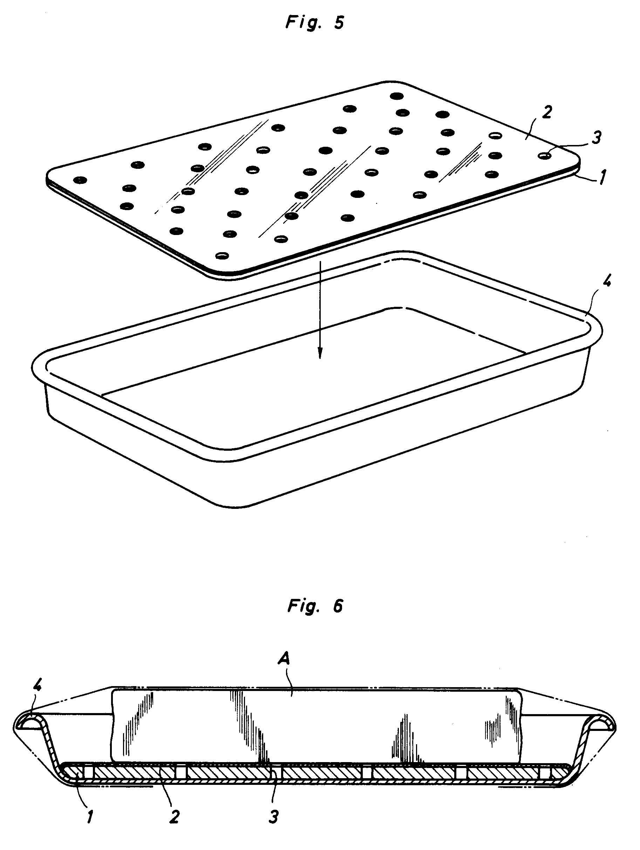

As shown in Figs. 5 and 6, the sheet material according to the present invention can be used by locating it, e.g. with adhesive, etc. in the bottom of a package container such as a tray. When a food (A) is packed in the package container (4), the drips from food (A) pass through the fine holes or openings of the protective sheet (2) and are absorbed by the non-woven sheet (1), a stable water-retaining form being thus maintained. Incidentally, the absorptive sheet of the present invention is not limited to such use in packages for food, but also it can be applied to other uses as a water-absorptive sheet for food, etc.

### Examples

Water activity value was measured in the usual way using the sheet material of Fig. 1. As a comparative example, measurement was made with cellulosic water-absorbing paper sold on the market. The results are shown in Table 1. Incidentally, the non-woven sheet (1) is composed of 60% LANSEAL ® (single-filament denier: 5 d; fiber length: 51 mm; degree of water-swellability: 150 times; carboxyl groups: 2.3 m mol/g) and 40% bicomponent side-by-side type polyolefine composite fibers (low density polyethylene: crystalline polypropylene = 1:1; 3 d × 51 mm) and its weight per area is 30 g/m². The protective sheet (2) is a polypropylene film having a weight per area of 30 g/m².

**Table 1**

| | Product of Example | Product of Comparative Example |
|---|---|---|
| No water added | 0.433 | 0.535 |
| 10% water added | 0.454 | 0.885 |
| 20% water added | 0.521 | 0.972 |

As apparent from Table 1, the Example showed a marked lowering of the water activity value in comparison with the Comparative Example.

In addition, a microorganism propagation test was conducted by adding 1 ml bacteria liquid of Bacillus subtilis to the sheet material of the present invention, and measuring the number of bacteria after standing at 35°C for 24 hours. As a comparative product, cellulosic water-absorbing paper sold on the market was used. The results are shown in Table 2.

**Table 2**

| | At the start | After 24 hours |
|---|---|---|
| Product of Example | 12 | 11 |
| Product of Comparative Example | 12 | More than 10⁴ |

As apparent from the above Table, no propagation of bacteria was observed even after 24 hours in the sheet material according to the present invention, bacteriostatic action thus being obviously shown.

We are not able to exactly explain the mechanism of this bacteriostatic action, however we suppose that, since the sheet material of the present invention holds absorbed water in a fine and complicated structure of entangled fibers, the degree of freedom of water molecules is restricted to markedly lower the water activity, and thus the sheet material is unsuited to become a culture ground of bacteria, etc.

Since the product of the present invention does not use powdery hydrogels for the water-absorptive non-woven sheet (1), there are no problems of hydrogel leakage or adhesion of hydrogels to food, etc. Furthermore, since the highly water-absorptive fibers have a larger surface area in comparison with powdery hydrogels, they give faster absorption. Moreover, since they have an excellent absorptive ability and retaining power, there is no problem of diffusion of drips resulting from capillary action.

In addition, since the absorption and retention of drips are conducted in a fine and complicated structure of entangled fibers, the absorbed water is retained securely, and this leads to a fall of water activity and hinders the sheet from becoming a culture ground for bacteria.

Furthermore, when an opaque film is used as the protective sheet on the side which comes into contact with food, etc., the appearance is further improved by the concealing effect, and moreover there are no problems of adhesion of single fibers to food, etc. by contact of food, etc. with fibers.

The invention thus provides an absorptive sheet suitable for food packaging and comprising a water absorptive non-woven sheet. This may have a protective sheet firmly combined therewith (e.g. integrally or by adhesive) on one or both faces; where there is a protective sheet on each face, the two protective sheets, and their mode of combination with the non-woven sheet, may be the same or different. Where the water absorptive non-woven sheet and a protective sheet are heat-bondable, then heat bonding (e.g. by hot needling) can give substantially integral combination thereof.

A protective sheet on the face of the water absorptive non-woven sheet to be uppermost needs to allow the passage of liquid therethrough into said absorptive sheet; where this protective sheet is of inherently water-impermeable material (e.g. a plastics film or sheet), it may be perforate for this purpose - e.g. perforated by the above-mentioned hot needling. The water absorptive non-woven sheet preferably has an opaque protective sheet on at least one surface to mask the color of liquid taken up by the said absorptive sheet. The non-woven water absorptive sheet constituting or forming part of the invention has fibers with a layer of hydrogel around a core of acrylonitrole polymer, the fibers containing carboxyl groups in an amount of 0.5-4.0 m mol/g.

## Claims

1. An absorptive sheet for food packing which comprises a water-absorptive non-woven sheet, wherein the non-woven water-absorptive sheet comprises water-absorptive fibers with a layer of hydrogel around a core of acrylonitrile polymer, these fibers containing carboxyl groups in an amount of 0.5-4.0 m mol/g.

2. An absorptive sheet as claimed in claim 1 wherein a protective sheet is provided on one or both surfaces of the water-absorptive non-woven sheet.

3. An absorptive sheet as claimed in claim 1 or 2 wherein the water-absorptive non-woven sheet has a water-swellability of 3 times or more.

4. An absorptive sheet as claimed in claim 1 or 2 or 3 wherein the water-absorptive non-woven sheet is made of water-absorptive fibers alone or of a mixture containing said fibers and heat adhesive fibers.

5. An absorptive sheet as claimed in any preceding claim having an upper protective sheet which is opaque.

6. An absorptive sheet as claimed in any preceding claim having a protective sheet secured on a face of the water-absorptive non-woven sheet by hot needling, said protective sheet in the combination having fine holes therethrough.

7. The use of sheet according to any of claims 1 to 6 for food packaging.

8. The use of sheet according to any of claims 1 to 6 for packaging moisture-containing food.

## Patentansprüche

1. Absorbierende Schicht zur Nahrungsmittelverpackung, welche umfaßt eine wasserabsorbierende, nicht-gewobene Schicht, wobei die nicht-gewobene, wasserabsorbierende Schicht wasserabsorbierende Fasern mit einer Lage von Hydrogel um einen Kern aus Acrylnitrilpolymer umfaßt, wobei diese Fasern Carboxylgruppen in einer Menge von 0,5 bis 4,0 m mol/g umfassen.

2. Absorbierende Schicht nach Anspruch 1, wobei eine Schutzschicht auf einer oder beiden Flächen der wasserabsorbierenden, nicht-gewobenen Schicht vorgesehen ist.

3. Absorbierende Schicht nach Anspruch 1 oder 2, wobei die wasserabsorbierende, nicht-gewobene Schicht ein Wasserquellvermögen von 3 mal oder mehr aufweist.

4. Absorbierende Schicht nach Anspruch 1, 2 oder 3, wobei die wasserabsorbierende, nicht-gewobene Schicht nur aus wasserabsorbierenden Fasern oder aus einer Mischung umfaßend die Fasern und hitzeklebende Fasern hergestellt ist.

5. Absorbierende Schicht nach einem der vorangegangenen Ansprüche, mit einer oberen Schutzschicht, welche opak ist.

6. Absorbierende Schicht nach einem der vorangegangenen Ansprüche, mit einer Schutzschicht befestigt an einer Fläche der wasserabsorbierenden, nicht-gewobenen Schicht durch Heißnadelung, wobei die Schutzschicht in der Kombination feine durchgehende Löcher aufweist.

7. Verwendung einer Schicht gemäß einem der Ansprüche 1 bis 6 zur Nahrungsmittelverpackung.

8. Verwendung einer Schicht gemäß einem der Ansprüche 1 bis 6 zur Verpackung feuchtigkeitshaltiger Nahrungsmittel.

## Revendications

1. Feuille absorbante pour emballage alimentaire, qui comprend une feuille non tissée absorbant l'eau, dans laquelle la feuille non tissée absorbant l'eau comprend des fibres absorbant l'eau avec une couche d'hydrogel autour d'un coeur en polymère d'acrylonitrile, ces fibres contenant des groupes carboxyle en quantité de 0,5-4,0 mmoles/g.

2. Feuille absorbante selon la revendication 1, dans laquelle une feuille protectrice est prévue sur l'une des surfaces ou sur les deux surfaces de la feuille non tissée absorbant l'eau.

3. Feuille absorbante selon la revendication 1 ou 2, dans laquelle la feuille non tissée absorbant l'eau possède un facteur de gonflement par l'eau de 3 ou plus.

4. Feuille absorbante selon la revendication 1, 2 ou 3, dans laquelle la feuille non tissée absorbant l'eau est formée uniquement de fibres absorbant l'eau ou d'un mélange contenant lesdites fibres et des fibres thermo-adhésives.

5. Feuille absorbante selon l'une quelconque des revendications précédentes, ayant une feuille protectrice supérieure qui est opaque.

6. Feuille absorbante selon l'une quelconque des revendications précédentes, ayant une feuille protectrice fixée par aiguilletage à chaud sur une face de la feuille non tissée absorbant l'eau, ladite feuille protectrice dans la combinaison étant traversée de petits trous.

7. Utilisation d'une feuille selon l'une quelconque des revendications 1 à 6 pour un emballage alimentaire.

8. Utilisation d'une feuille selon l'une quelconque des revendications 1 à 6 pour l'emballage d'un aliment contenant de l'humidité.
